# EUROPEAN PATENT APPLICATION

(11) **EP 2 769 629 A1**
(43) Date of publication of application: **27.08.2014**
(21) Application number: 13000954.1
(22) Date of filing: 25.02.2013
(51) Int. Cl.: A23L 1/09, A23L 1/10, C08B 37/00, C13K 13/00

(54) **Process for preparing composition**

(71) Applicant: Cargill, Incorporated, Wayzata, MN 55391 (US)
(72) Inventor: The designation of the inventor has not yet been filed
(74) Representative: Elseviers, Myriam

(57) **Abstract**

The invention relates to a process for preparing a composition comprising hydrolysing arabinoxylan to arabinoxylan-oligosaccharides in spent grain. Further the invention relates to an arabinoxylan-oligosaccharides rich composition. Further, the invention relates to the use of the arabinoxylan-oligosaccharide rich composition to for promoting the flora of the colon and/or for promoting the growth of lactic acid bacteria.

## Description

### Field of the Invention

The invention relates to a process for preparing a composition comprising hydrolysing arabinoxylan to arabinoxylan-oligosaccharides in spent grain. Further the invention relates to an arabinoxylan-oligosaccharides rich composition. Further, the invention relates to the use of the arabinoxylan-oligosaccharide rich composition to for promoting the flora of the colon and/or for promoting the growth of lactic acid bacteria.

### Background of the Invention

Spent grain is a by-product of wet grain fermentation processing, for instance beer brewing process, obtained after separating the water-soluble and water-insoluble fraction of the aqueous mash. Currently, spent grain is used as is, or dried, as feed composition or feed ingredient. Spent grain is considered to be a source of protein and water-soluble vitamins, and fibre. It is quite palatable and is readily consumed by animals. However, currently the overall nutritional value of spent grain for monogastric animals and ruminants remains relatively low. Additionally, after further processing, spent grain can also be used as food ingredient.

There is a need to increase the value of spent grain.

There is also a need for a composition rich in arabinoxylan-oligosaccharides.

### Summary of the Invention

The current invention relates to a process for preparing a composition comprising hydrolysing at least part of the arabinoxylan of spent grain into arabinoxylan-oligosaccharides.

The current invention further relates to a composition comprising from 1 to 90 weight/weight% (w/w %) of arabinoxylan-oligosaccharide.

### Detailed Description

The current invention relates to a process for preparing a composition comprising hydrolysing at least part of the arabinoxylan of spent grain into arabinoxylan-oligosaccharides.

Spent grain means the mainly water-insoluble fraction obtained after separating the water-soluble and water-insoluble fraction of the aqueous mash prepared from milled grains, in brewing processes starting from grains. Spent grain typically has a dry substance of from 15 to 30%. For the purpose of the present invention spent grain can be used at a suitable dry substance that will enable enzymatic activity to take place. Said dry substance can be from 10 to 90%, from 20 to 80%, from 20 to 70%, from 30 to 60%, or from 40 to 50%. The dry substance can be modified by partial drying or dilution.

Depending on the starting material, malting and brewing process conditions used and adjuncts added in the process, and the processing conditions (time, temperature profile, pH...), the composition of the spent grain will vary to a limited extent. However, spent grain generally comprises water insoluble proteins and residues of husks, pericarp, seed coat, aleurone and endosperm. About half of the spent grain dry mass is carbohydrates, the rest being mostly proteins and lignin. Carbohydrates include cellulose and non-cellulosic polysaccharides such as starch, arabinoxylans and beta-glucans.

Starting material and adjuncts used in brewing process include but is not limited to barley, wheat, corn, rice, oats, sorghum, millet, rye.

In the process of the present invention, arabinoxylan present in spent grain is hydrolyzed into arabinoxylan-oligosaccharides.

Arabinoxylans (AX) are classified as non-starch polysaccharides. The arabinoxylan backbone consists of beta-1,4-bound xylose residues and has an average degree of polymerisation greater than 100. The backbone may be substituted with varying levels of substituents such as arabinose, galactose, rhamnose, xylose, glucose, glucuronic acid, methylglucuronic acid, acetic acid, galacturonic acid, or short oligosaccharide side chains. Also, hydroxycinnamic acids such as ferulic acid, dehydroferulic acid, p-coumaric acid, caffeic acid and sinapic acid can be linked to one or more arabinose residues.

The term "arabinoxylan-oligosaccharides" (AXOS), in the context of the present invention, refers to preparations consisting predominantly of arabinoxylan-oligosaccharides and minor amounts of xylo-oligosaccharides and corresponding to poly- or oligosaccharides comprising a backbone of beta-(1-4)-linked D-xylopyranosyl residues (xylose) with a degree of polymerisation of the backbone from 2 and 100, preferably from 2 to 50, 3 to 30, 3 to 20, 5 to 10, with no (in the case of xylo-oligosaccharides) or at least one alpha-L-arabinofuranosyl (arabinose) residue linked to one of the xylose residues of the backbone per molecule. Other substituents such as acetyl, alfa-glucuronyl, alfa-4-O-methylglucuronyl, galacturonyl, xylosyl, rhamnosyl, galactosyl, or glucosyl side chains, or short oligosaccharide side chains, can be attached to one or more of the xylose residues and hydroxycinnamic acids, such as ferulic acid, dehydrodiferulic acid, p-coumaric acid, caffeic acid or sinapic acid, can be linked to one or more of the arabinose units. AXOS can be derived from arabinoxylans by partial hydrolysis, e.g. using acids or arabinoxylan degrading enzymes and/or physical treatment. Without being limited, a suitable preparation of AXOS is for example provided in EP 1 418 819 or EP 1 758 470.

It is further to be noted that AXOS in the present invention also covers the preparations that are not 100% pure and are further containing ashes, proteins and other carbohydrates. It goes without saying that the current invention also covers the AXOS enriched preparations whereby AXOS can be added in liquid or powder form.

AXOS are characterized by a certain degree of polymerisation (DP), i.e. the amount of monomeric units forming the AXOS backbone. Different DP provides different properties to the AXOS. AXOS having a low average DP, ranging from 3 to 50 have been shown to provide prebiotic effects. AXOS having higher average DP, above 50, can also have an impact on the viscosity, the mouthfeel and texture of the composition where they are present. Thus by increasing the amount of AXOS in spent grain, and by modulating the DP depending on the desired effect, the value of spent grain is significantly increased.

AXOS are further characterized by their degree of arabinose substitution. Considering the large influence of carbohydrate structure on fermentation properties, different degrees of arabinose substitution have different effects on the health of the human or animal consuming it. Preferably, AXOS having a degree of arabinose substitution of 0.1 to 0.7, such as: of 0.1 to 0.2, of 0.2 to 0.3, of 0.3 to 0.4, of 0.4 to 0.5, of 0.5 to 0.6 or of 0.6 to 0.7 can be produced.

Additionally, AXOS are further characterized by the presence of other substituents such as ferulic acid. Ferulic acid and feruloylated AXOS have antioxidant properties (Ou et al. 2007, Journal of agricultural and food chemistry 55 (8), 3191-3195). Preferably, AXOS having a ferulic acid content of 1 to 10 w/w %, such as 1 to 2 w/w %, 2 to 3 w/w %, 3 to 4 w/w %, 4 to 5 w/w%, 5 to 6 w/w%, 6 to 7 w/w%, 7 to 8 w/w%, 8 to 9 w/w%, 9 to 10 w/w%.

Hydrolysis can be done by one of the following methods, or by combinations of such methods:
- Enzymatic hydrolysis by addition of xylanases, preferably endoxylanases,
- Chemical hydrolysis by addition of organic acid and/or inorganic acid,
- Mechanical hydrolysis such as ball milling, jet milling, cryo milling, high shear,
- Fermentation by yeast or fungus, said yeast or fungus producing xylanases in situ,
- Thermal hydrolysis by applying steam or super heated stem,
- Hydrolysing by use of mircroreactors, immobilized catalysts or in salty environment
- Hydrolysis by use of microwaves technology, ultrasound, supercritical fluids.

Hydrolysis is preferably done at least by adding an endoxylanase. The endoxylanase can be added as a single enzyme or as part of an enzyme preparation comprising other enzymes, such as amylases, glucosidases, cellulases, esterases, glucuronidases, arabinofuranosidases, xylosidases. The endoxylanase alone or as part of an enzyme preparation is added in suitable amount to treat said spent grain. Such amounts will be easily determined by the person skilled in the art.

The term endoxylanase refers to an enzyme that is able to hydrolyze internal glycosyl bonds linking xylose residues in xylose containing polysaccharides. Such glycosyl bonds can be for instance the beta-1,4-glycosyl bond in beta-D-xylopyranosyl-1,4-beta-D-xylopyranosyl units of such polysaccharides. Endoxylanases can be derived from a variety of organisms, including plant, fungal (e.g. species of *Aspergillus, Penicillium, Disporothichum, Neurospora, Fusarium, Humicola, Trichoderma*) or bacterial species (e.g. species of *Bacillus, Areomonas, Streptomyces, Nocardiopsis, Thermomyces, Thermotoga*).

Endoxylanase useful for this purpose are well known in the art. The ararbinoxylan comprised in spent grain are primarily water unextractable arabinoxylans (i.e. these cannot be extracted from the cell wall by water). Therefore, it is preferred to add at least endoxylanases having a high selectivity for water unexctractable arabinoxylans (Moers et al. 2005). Such endoxylanases include glycoside hydrolase family 11 endoxylanases (Henrissat 1991).

Spent grain comprising the enzyme is then incubated at a temperature of from 5 to 105°C, suitable for the specific enzymes present. The person skilled in the art will easily determine the temperature of the process depending on the enzyme present. The treatment conditions (time, temperature, pH, moisture...) and enzyme dosage will influence the amount of AXOS produced and the type of AXOS, regarding the DP, degree of arabinose substitution and ferulic acid content.

Additionally, spent grain can be advantageously subjected to a pre-treatment to increase the availability of arabinoxylan for the endoxylanase. Such pre-treatment can be disintegration of the fibre structure to improve arabinoxylans accessibility. This can be done by one or more of the following: application of heat (superheated steam, steam explosion), mechanical impact (milling), enzymatic treatment, treatment with ultrasound, treatment with microwaves, and application of pulsed electrical field. Such pre-treatment is preferably done before the hydrolysis step.

The current invention further relates to a process comprising the steps of:
a. Adding arabinoxylan containing material to spent grain, and
b. Hydrolysing at least part of the arabinoxylan into arabinoxylan-oligosaccharides.

Spent grain and hydrolysis step are as defined hereinbefore. Additionally, when hydrolysis is done by addition of endoxylanase, the suitable endoxylanase depends on the arabinoxylan present in the arabinoxylan containing material, being arabinoxylans with a different degree of polymerization and nature and degree of substitution and being water unextractable arabinoxylan, water extractable arabinoxylan or a mixture of both. Suitable endoxylanases include glycoside hydrolase family 10 or 11 endoxylanases.

Arabinoxylan containing material preferably comprises from 10 to 90 w/w%, such as 10 to 80 w/w%, 20 to 70 w/w%, 30 to 60 w/w%, 40 to 50 w/w%, 45 to 50 w/w % of arabinoxylans.

Arabinoxylan containing material can be derived from several plants such as cereal and non-cereal sources such as seeds from Plantago or Gossypium, ryegrass, pangola grass, banana peel, bamboo shoots and soft woods such as spruce, pine. Arabinoxylan containing material can also be a by-product of a grain fermentation process such as brewer's or distillers spent grain. Spent grain means the mainly water-insoluble fraction obtained after separating the water-soluble and water-insoluble fraction of the aqueous mash prepared from milled grains, in brewing processes (brewers spent grain) or ethanol production processes (distillers spent grain) starting from grains.

Cereal refers to plants of the botanical family of the Poaceae, including but not limited to species such as wheat, durum wheat, triticale, barley, oats, rye, sorghum, maize, rice and millet.

The arabinoxylan containing cereal material can be the entire grain, the milled grain or fractions of the grain, such as bran, endosperm, aleurone or pericarp enriched fractions, etc. Bran or bran fractions are to be understood as grain-derived mill stream fractions, whether derived from wet or dry milling, which is enriched in any or all of the tissues to be selected from aleurone, pericarp, and seed coat, as compared to the corresponding intact grain and/or as a lower starch concentration than the corresponding intact grain.

Additionally, the arabinoxylan containing material can be subjected to a pre-treatment to increase the amount and/or availability of the arabinoxylans during hydrolysis, in particular during enzymatic hydrolysis with endoxylanase as specified above. Such pre-treatment can be disintegration of the fibre structure, enrichment in arabinoxylans, extraction of arabinoxylans or combinations thereof.

Disintegration of the fibre structure to improve arabinoxylans accessibility can be done by application of heat (superheated steam, steam explosion), by mechanical impact (milling), by enzymatic treatment, by treatment with ultrasound, by treatment with microwaves, by application of pulsed electrical field.

Enrichment in arabinoxylans can be done by removal of starch for example enzymatically by addition of amylases; by removal of proteins, for example enzymatically by addition of proteases; by removal of fat for example enzymatically by addition of lipases, by removal of other carbohydrates for example enzymatically by addition of mannase, pectinase, cellulase and the like; by debranning or by abrasive techniques.

Extraction of arabinoxylans can be done by alkali or water treatment, treatment with organic solvents, treatment with ionic liquids, treatment with supercritical carbon dioxide, or by extrusion.

After the hydrolysis step, the composition, i.e. spent grain comprising increased amounts of AXOS (enriched spent grain) can be used as such. Alternatively, an additional step to lower the water activity, such as a drying step, can be performed. Drying can bring the composition's dry substance to a value of from 10 to 90%, from 20 to 70%, from 30 to 60%, or from 40 to 50%. When the dry substance is lower than 80%, it is advisable to rapidly feed the enriched spent grain to animals in order to prevent microbial degradation by moulds or yeasts, or to stabilize the enriched spent grain composition by techniques known by people skilled in the art, such as addition of organic acids, salts.

Alternatively to or additionally to the water activity lowering step, the enriched spent grain can be refined to remove impurities. This can be done for example by one or more of the following methods:
- Chromatography: ion exchange, size exclusion, affinity,
- Silica treatment
- Activated carbon treatment,
- Electrodialysis
- Continuous deionization,
- Capacitive deionization,
- Filtration: ultrafiltraton, nanofiltration, microfiltration,
- Reversed osmosis,
- Ethanol precipitation
- Use of coagulantia,
- Removal of monomers by oxidation.

Alternatively and preferably additionally, the AXOS present in the enriched spent grain can be modified. This can be done by one or more of following methods, depending on the further use of the enriched spent grain:
- Fractionation of AXOS in the enriched spent grain to create
   o fractions with high DP, low DP, high degree of arabinose substitution, low degree of arabinose substitution,
   o fractions rich in ferulic acid
      Such fractionation methods are ethanol precipitation, affinity chromatography, size exclusion chromatography, hydrophobic interaction chromatography, use of activated carbon and ethanol, molecular imprinted polymers, ultrafiltration or nanofiltration.
- Enzymatic modification for
   o Removal of arabinose
   o Removal of ferulic acid,
   o Removal of xylose form reducing or non-reducing end or side chains,
   o Removal of (methyl)glucuronic acid,
- Chemical modification by esterificaton, crosslinking of ferulic acid and the like.

The composition prepared with the process of the present invention can be used as feed composition to be readily fed to animals, as feed ingredient to be incorporated in a more complete feed formula or used as food ingredient.

Thus in one embodiment, the invention relates to the process as defined herein for preparing a food ingredient. In another embodiment, the invention relates to the process as defined herein for preparing a feed composition. In another embodiment, the invention relates to the process as defined herein for preparing a feed ingredient.

For the purpose of completeness an overview of the steps involved in a typical brewing process is given below. The skilled person understands that according to the beer style, some alternative steps may occur.

Malting: involves the germination of cereal grains by steeping and soaking in water to allow sprouting. During sprouting several types of enzymes are produced, including those that catalyze the conversion of starch into simple, fermentable sugars. The germinated grains are then dried and can be roasted (a process called kilning) to kill the sprouts and to provide the grain with roasted grain flavours and color. Grains treated this way are called malted grains or simply malt. The malt is milled to crack the grains and to remove the sprouts, which allows the content of the malted grains to be better exposed to water during mashing and boiling.

Mashing involves the mixing of grist, including milled malted grains, with water, to obtain the mash. The mash is heated to reach more optimal temperatures for the activity of malt enzymes or exogenously added enzymes. Mashing is typically executed at temperatures ranging from about 45°C to about 75°C. during mashing oligosaccharides, disaccharides and monosaccharides are generated by enzymatic breakdown of complex carbohydrates, mainly starch. Such simple sugars form a carbon and energy source for the microorganisms during fermentation.

Lautering involves the separation of the mash into a liquid extract, called wort, and the insoluble materials, called spent grains. Lautering is typically executed at a temperature of about 75°C to about 100°C.

Wort boiling involves heating of the wort at water boiling temperature. The key purposes of boiling is to (i) kill microorganisms in order to eliminate competition for the fermentation microorganisms, (ii) coagulate and to precipitate proteins of other solids that may cause turbidity of the beer, and (iii) extract and chemically modify bitter, aromatic and flavouring compounds from herbs, such as hops, or herb extracts added before or during wort boiling.

Cooling and inoculation involves the cooling of the boiled wort to a temperature that is optimal for the fermentation microorganisms. These fermentation microorganisms, for example brewer's yeast (*Saccharomyces cerevisiae*), are either added on purpose to the wort (called pitching) or added by spontaneous inoculation.

Fermentation involves the incubation of the wort inoculated with the fermentation microorganisms. During fermentation the simple sugars are converted by these microorganisms into carbon dioxide, ethanol and numerous other by-products.

Post-fermentation processing are the steps following primary fermentation up to the production and packaging of a finished beer. Depending on the type of beer and the method used, such post fermentation processing may involve one or more of different steps, such as maturation of the beer; filtration of the beer; additional fermentation; addition of adsorbent, herbs, herb extracts, fruits, fruit extracts; carbonation; pasteurisation; microfiltration; packaging and the like.

The present invention further relates to a feed composition comprising from 1 to 90w/w % of AXOS, such as from 5 to 90 w/w%, from 10 to 90 w/w%, from 20 to 90 w/w %, from 30 to 90 w/w%, from 40 to 90 w/w%, from 50 to 90w/w %, from 60 to 90w/w %, from 70 to 90w/w %, from 80 to 90 w/w %, from 5 to 80 w/w %, 5 to 70 w/w %, 5 to 60 w/w %, 5 to 40 w/w %, 5 to 30 w/w %, 5 to 20 w/w % or 5 to 15 w/w % of AXOS. Preferably the AXOS is not added to the composition but is produced 'in-situ' such as by the process of the present invention. Thus preferably, the present invention relates to a composition comprising from 1 to 90 w/w % of AXOS, said composition being obtainable by the process of the present invention.

The AXOS of the composition is as defined hereinabove in terms of DP, degree of arabinose substitution and ferulic acid content.

The composition can be a mixture of spent grain treated such as to contain low DP AXOS and spent grain treated such as to produce high DP AXOS.

The feed composition of the present invention has a dry substance of from 10 to 90%. In case of liquid feed composition, typically the feed composition has a dry substance of from 10 to 30%. In case of a moist feed composition, it typically has a dry substance of from 30 to 70%. In case of a dried feed composition, the feed composition has a dry substance of from 70 to 90%.

The composition of the present invention can be a food ingredient, a feed composition to be readily fed to animals or a feed ingredient to be incorporated in a more complete feed formula.

The present invention further relates to the use of the composition of the present invention as a food ingredient to be incorporated in a food composition comprising other food ingredients, as a feed composition to be readily fed to animals or as a feed ingredient to be incorporated in a feed composition comprising other feed ingredients.

Further the present invention relates to the use of the composition of the present invention for promoting the flora of the colon and/or for promoting the growth of lactic acid bacteria.

## Claims

1. A process for preparing a composition comprising hydrolysing at least part of the arabinoxylan of spent grain into arabinoxylan-oligosaccharides.

2. The process of claim 1 further comprising:
a. Adding arabinoxylan containing material to spent grain, and
b. Hydrolysing at least part of the arabinoxylan into arabinoxylan-oligosaccharides.

3. The process of claim 2 wherein hydrolysis comprises incubating spent grain with endoxylanase.

4. The process of claim 3, wherein the endoxylanase comprise endoxylanase of glycoside hydrolase family 11.

5. The process of any of claims 2 to 4, wherein the arabinoxylan containing material is chosen from the group consisting of cereal bran, cereal bran fractions, cereal endosperm, soft wood, wheat aleurone, wheat pericarp and combinations thereof.

6. A composition comprising from 1 to 90 w/w % of arabinoxylan-oligosaccharide.

7. The composition according to claim 6 obtainable by the process of any of claims 1 to 5.

8. The composition of claims 6 or 7 **characterized in that** it has a dry substance of from 20 to 30 %.

9. The composition of claims 6 or 7, **characterized in that** it has a dry substance of from 30 to 70%.

10. The composition of claims 6 or 7, **characterized in that** it has a dry substance of from 70 to 90%.

11. Use of the composition of any of claims 6 to 10 as feed composition, as feed ingredient in a feed composition comprising other feed ingredients or as food ingredient in a food composition comprising other food ingredients.

12. The use of claim 11 for promoting the flora of the colon and/or for promoting the growth of lactic acid bacteria.
